# EUROPEAN PATENT APPLICATION

(11) **EP 4 360 513 A1**
(43) Date of publication of application: **01.05.2024**
(21) Application number: 23205721.6
(22) Date of filing: 25.10.2023
(51) Int. Cl.: A47J 27/00

(54) **METHOD FOR MAKING A CONTAINER FOR COOKING FOOD AND RESPECTIVE CONTAINER FOR COOKING FOOD**

(30) Priority: 26.10.2022 IT 202200022095
(71) Applicant: TVS S.p.A., 61033 Fermignano (PS) (IT)
(72) Inventor: Bertozzini, Giuseppe Alberto, 61033 FERMIGNANO (IT)
(74) Representative: Feltrinelli, Secondo Andrea

(57) **Abstract**

A method for making a container (C) for cooking food comprises the steps of permanently connecting by means of a pressing step a first component (3) in a non-ferromagnetic material, designed to form the body of said container (C) for cooking food, with a second component (4) in a ferromagnetic material, designed to form a bottom (5) of said container (C) for cooking food and forming the first component (3), with or without the second component (4), to obtain the container (C) for cooking food; the second component (4) is obtained by welding a first element with a second element (2); the second element (2) includes a plurality of holes or undercuts (2c) facing the first component (3) into which the material of the latter is inserted; the container (C) thus obtained is also provided.

## Description

### TECHNICAL FIELD OF THE INVENTION

The present invention generally concerns a method for making a container for cooking food and a respective container for cooking food.

In particular, the present invention concerns a method for making a container for cooking food and a respective container for cooking food particularly suitable for use on electromagnetic induction heat sources.

### STATE OF THE PRIOR ART

In the state of the art, different types of containers for cooking food are known, or in any case cooking utensils particularly suitable for use on electromagnetic induction heat sources, such as for example pans, pots, pans, saucepans, woks, grills and similar.

Some of these types of containers include a bottom made of ferromagnetic material and a body, typically bowl-shaped, made of non-ferromagnetic material, fixed to such bottom.

The coupling of these components allows to obtain a good technical result in the use of this container, as the bottom in ferromagnetic material heats up due to the eddy currents created due to the effect of the magnetic field generated by the electromagnetic induction heat source, thus transferring the heat to the body made of non-ferromagnetic material, which is responsible for cooking food.

A known method, illustrated for example in EP0688525A1, for the production of this type of container, consists in joining a disc made of ferromagnetic material presenting a plurality of holes, by means of a high tonnage pressing step at room temperature, which will constitute the bottom of the container, with an element made of non-ferromagnetic material, which will constitute the body, i.e., the cooking base and the side wall, of the container.

The element made of non-ferromagnetic material is able to permanently connect to the disk made of ferromagnetic material by means of the plurality of holes.

The bottom of the container will therefore present the plurality of holes filled with respective portions of the element made of non-ferromagnetic material which decrease the efficiency of the container on electromagnetic induction heat sources since there are areas that do not generate eddy currents and do not transfer heat at the cooking base.

Another method known, in the state of the art, for making this type of container, consists in the joining by brazing of a first non-perforated element made of ferromagnetic material designed to constitute the bottom of the container and a second element made of non-ferromagnetic material designed to form the body of the container, using a brazing alloy.

Brazing is carried out by exerting appropriate pressure on the components one on the other and subjecting them to heating up to a temperature of around 500°C. Heating is typically performed using an induction device, in which metal coils crossed by current induce an electromagnetic field that passes through the assembly being processed. In particular, this electromagnetic field in turn generates eddy currents in the first element made of ferromagnetic material which thus reaches the desired temperature and can heat, by conduction, also the second element made of non-ferromagnetic material and the brazing alloy so that all the components weld together.

This method uses, firstly, a hot process which therefore involves a certain expenditure of thermal energy and, secondly, two different plants respectively for the connection of the first non-perforated element made of ferromagnetic material and the second element made of non-ferromagnetic material and for the subsequent forming of the body of the container, significantly increasing production costs.

A further known method, in the state of the art, involves the connection of a first non-perforated element made of ferromagnetic material designed to constitute the bottom of the container with a second element made of non-ferromagnetic material designed to constitute the body of the container by means of the "*impact bonding*" technique. In essence, the first non-perforated element made of ferromagnetic material and the second element made of non-ferromagnetic material are welded concentrically, brought to a high temperature, for example around 500°C, and pressed using a worm screw balance. The heat and force of the impact connect the two components together by seizing the surfaces. Finally, the body of the container will be formed by mechanical molding.

Also this method, in addition to exploiting a hot process, requires different plants respectively for the connection of the first non-perforated element made of ferromagnetic material and the second element made of non-ferromagnetic material and for the subsequent forming of the body of the container, significantly increasing production costs.

It should be considered that, in any case, a main problem common to the second and third method just described is the continuous thermal stress to which the first element made of ferromagnetic material is subjected. In this regard, its continuous heating and cooling causes a transition from expansion to contraction which can also occur later during use of the container itself.

This can potentially generate the disconnection of the bottom from the body of the container, especially at the curved edges, or in any case the cooking base of the container can become convex, with the food which, during cooking, can accumulate more at the edges than in the center of the container, and consequently cooking incorrectly.

Documents WO2015114581A1, US2017245677A1 and KR20110011902A teach respective containers for cooking food according to the state of the prior art.

With reference to documents WO2015114581A1 and US2017245677A1, both do not describe a first component made of non-ferromagnetic material designed to constitute the body of a container for cooking food permanently connected to a second component designed to constitute the bottom of a container for cooking food which second component comprises a first element made of a first ferromagnetic material and a second element made of a second ferromagnetic material, different or equal to the first ferromagnetic material, having a plurality of holes or undercuts and/or one or more slots and/or one or more notches, permanently connected with the upper surface of the first element.

It is therefore necessary to design and provide a method for making a container for cooking food and a respective container for cooking food which allows the disadvantages of the prior art listed above to be overcome.

### OBJECTS OF THE INVENTION

The technical aim of the present invention is to improve the state of the art in the sector of methods for making containers for cooking food and the respective containers for cooking food.

Within this aim, it is an object of the present invention to provide a method for making containers for cooking food which uses a cold pressing step, thus avoiding the use of thermal energy and eliminating or, in any case, significantly mitigating the possibility of disconnection of the bottom from the body of the container and/or the deformation of the cooking base of the container.

A further object of the present invention is to provide a method for making containers for cooking food which allows the use of a single plant for the production of both the bottom and the body of the container, thus avoiding the production of semi-finished products using different plants, in this way significantly reducing production costs.

Another object of the present invention is to provide a method for making containers for cooking food and a respective container for cooking food having improved performance when used on electromagnetic induction heat sources.

Finally, yet another object of the present invention is to provide a container for cooking food which allows a high degree of coupling between the bottom and the body.

This aim and these objects are achieved by a method for making a container for cooking food according to claim 1.

Furthermore, this aim and these objects are also achieved by a container for cooking food according to claim 9.

The dependent claims refer to preferred and advantageous embodiments of the invention.

### BRIEF DESCRIPTION OF THE DRAWINGS

Other features and advantages of the invention will be more evident from the description of a non-limiting embodiment of a method for making a container for cooking food and a respective container for cooking food, illustrated for indicative purposes in the attached drawings in which:
figures 1 to 6 show respectively the steps of a method for making a container for cooking food according to an embodiment of the present invention,
figure 7 is a cross sectional view of a container for cooking food according to an embodiment of the present invention,
figure 8 shows an enlarged detail of a section of the bottom of the container for cooking food according to the embodiment of figure 7,
figure 9 shows a possible embodiment of the first element of a method and of a container for cooking food according to an embodiment of the present invention,
figures 10 to 19 show respectively a possible embodiment of the second element of a method and of a container for cooking food according to an embodiment of the present invention.

In the attached drawings, identical parts or components are identified by the same reference numbers or letters.

### EMBODIMENTS OF THE INVENTION

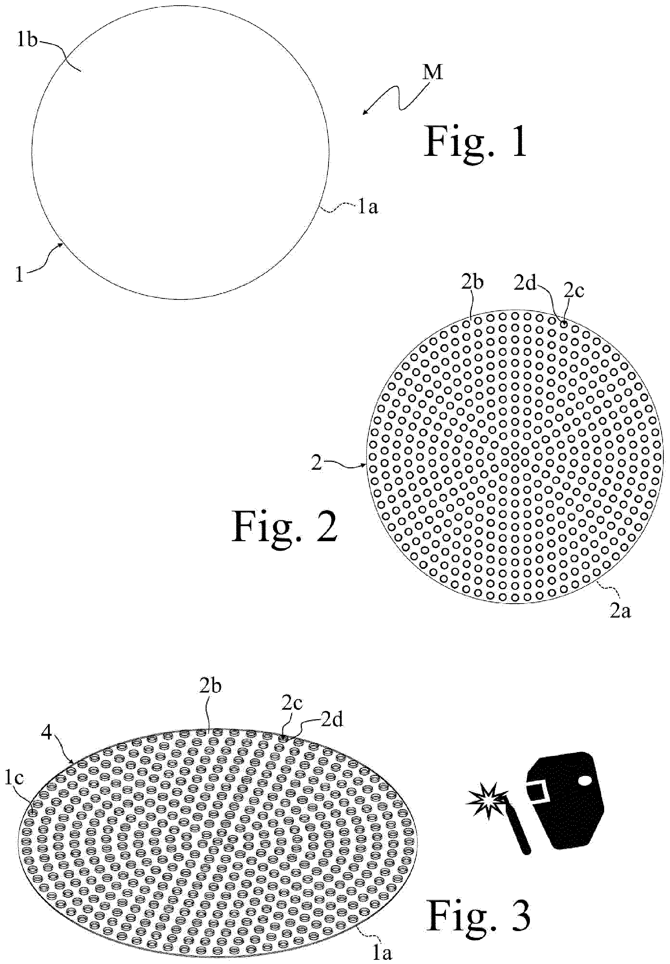

With reference to figure 1, the letter M indicates as a whole a method for making a container C for cooking food according to an embodiment of the present invention.

The method M is particularly, but not exclusively, suitable for making containers for cooking food that can be used on electromagnetic induction heat sources.

Furthermore, the method M is particularly, but not exclusively, suitable for making pots, pans, saucepans, grills, casseroles, woks and similar.

The method M according to the present invention initially includes the step of providing a first component 3 in a non-ferromagnetic material, designed to constitute the body of the container C for cooking food.

The step of providing a second component 4 in a ferromagnetic material designed to constitute a bottom 5 of the container C for cooking food is then envisaged.

The method M according to the present invention then includes the step of permanently connecting the second component 4 to the first component 3 by means of a pressing step between the first component 3 and the second component 4 as well as the step of forming the first component 3, with or without the second component 4, to obtain the body of the container C for cooking food.

It should be noted that the wording "forming" means the shaping or modelling of the first component 3, i.e., giving a shape to the latter, while the wording "with or without the second component 4" means that the step of forming the first component 3 can take place before or after the step of permanently connecting the second component 4 to the first component 3. In essence, the first component 3 can first be formed, i.e., shaped or modeled, and then permanently connected to the second component 4 to obtain the body of the container C or permanently connected to the second component 4 and then formed, i.e., shaped or modeled, to obtain the body of the container C.

In particular, the second component 4 is obtained with the following steps:
- providing at least a first element 1 in a first ferromagnetic material, which includes or defines a lower, in use, surface 1a and an upper, in use, surface 1b,
- provide second element 2 in a second ferromagnetic material equal to or different from the first ferromagnetic material, which includes or defines a lower, in use, surface 2a, an upper, in use, surface 2b and a plurality of holes or undercuts 2c, delimited by a respective delimiting wall 2d that rises or develops from the upper, in use, surface 2b of the second element 2, and/or one or more slots 2c1 and/or one or more notches 2c2, and
- permanently connecting the second element 2 with the upper, in use, surface 1b of the first element 1 to obtain the second component 4.

It should be noted that with the term "in use" referring to an upper surface of the first element 1 and/or the second element 2, means that surface which, during use by the end user of the container C, is facing upwards, regardless of whether or not it has any other surfaces above it, while the term "in use" referring to a lower surface of the first element 1 and/or the second element 2, means that surface which during use by the end user of the container C, is facing downwards, regardless of whether or not it has any other surfaces underneath it.

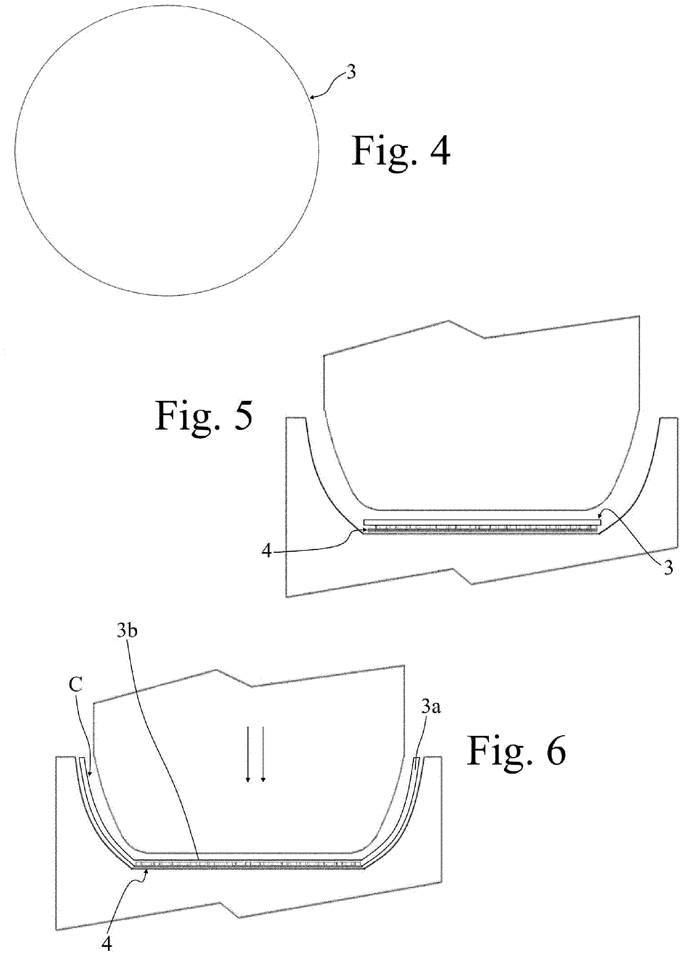

So far as the first element 1 is concerned, according to the non-limiting embodiment of the present invention shown in figures 1 to 6, it is of discoidal shape.

Alternatively, the first element 1 could also have other shapes, for example a rectangular plan shape, if desired with rounded edges, a square plan shape, if desired with rounded edges, an elliptical plan shape, an annular plan shape, or similar.

It should be noted that this shape is to be considered as the raw shape of the first element 1, i.e., the shape before connecting it with other components that will make the container C.

The first ferromagnetic material of the first element 1 can be a ferromagnetic steel, for example a ferritic stainless steel, such as AISI 430 stainless steel, or a martensitic stainless steel, such as AISI 410 stainless steel.

Optionally, the first element 1 has a thickness between about 0.1 mm and about 5 mm, for example about 0.5 mm and, if desired, a diameter between about 10 cm and about 30 cm, for example about 19 cm.

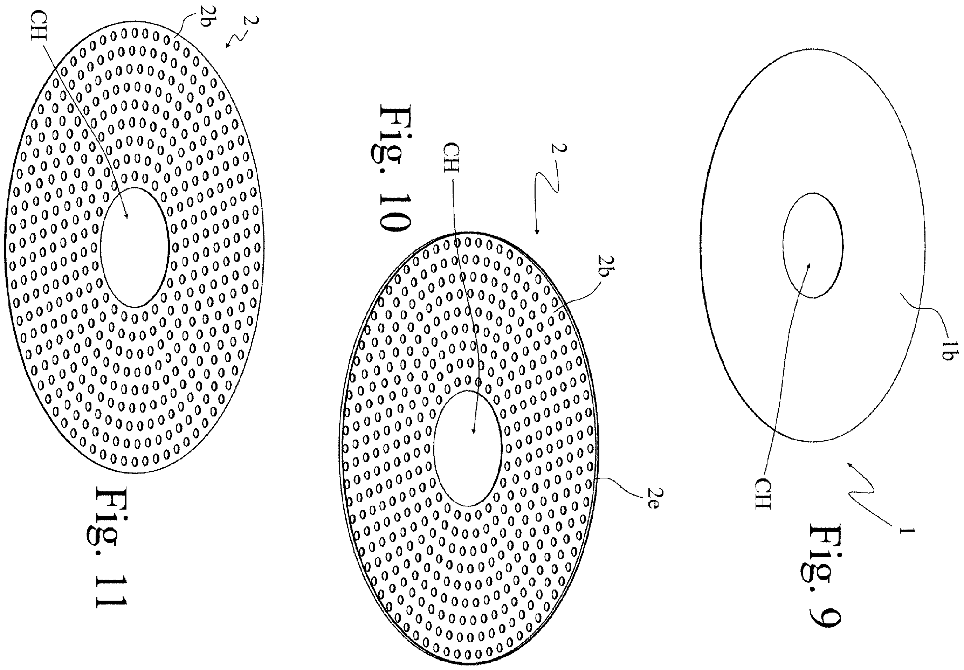

According to the non-limiting embodiment of the first element 1 shown in figure 9, the latter can have a central hole CH, for example having a width between about 10 mm and about 80 mm, preferably about 30 mm.

The presence of a central hole CH on the first element 1 and/or on the second element 2 allows for better formation of induced eddy currents and better anchoring between the first element 1, the second element 2 and the first component 3.

As regards the second element 2, according to the non-limiting embodiment of the present invention shown in figures 1 to 6, it is of discoidal shape.

According to other non-limiting embodiments of the present invention, the second element 2 could also have other shapes, for example a rectangular plan shape, if desired with rounded edges, a square plan shape, if desired with rounded edges, an elliptical plan shape, an annular plan shape, a toroidal plan shape or present any geometric drawing.

It should be noted that this shape is to be considered as the raw shape of the second element 2, i.e., the shape before connecting it with the other parts that will make the container C.

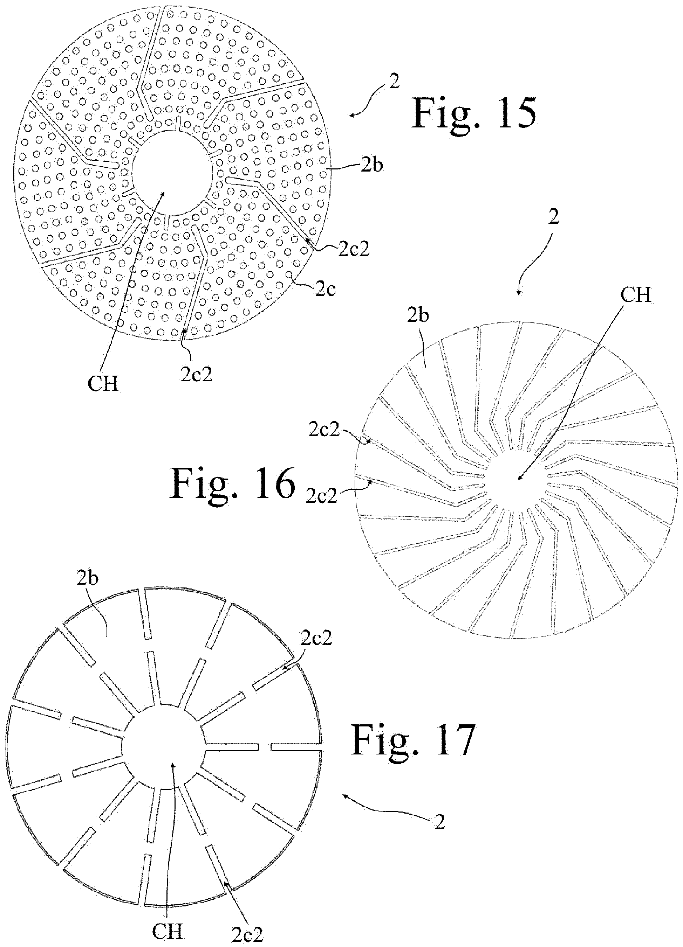

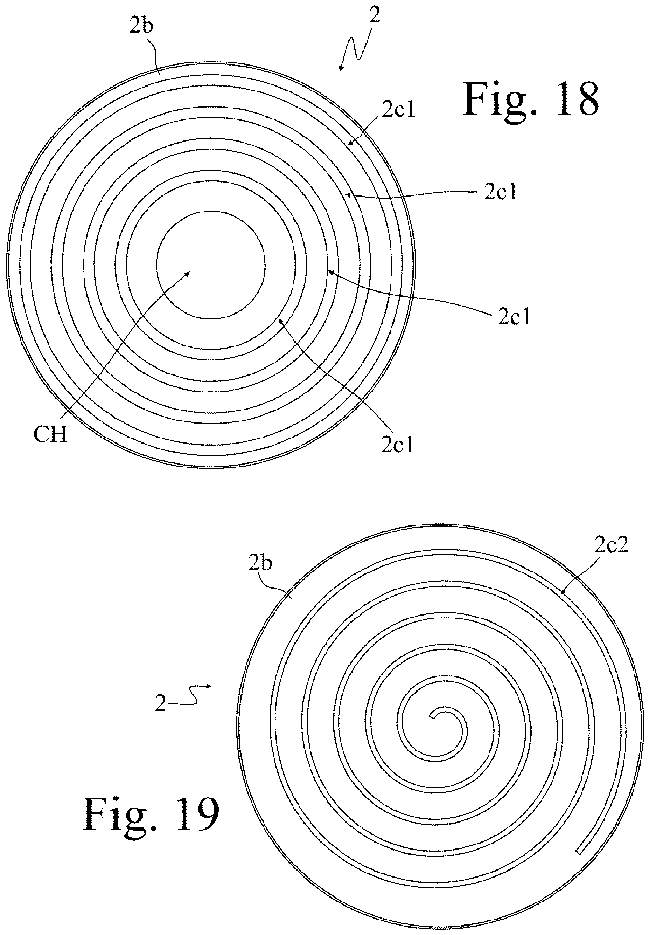

Furthermore, as shown in the non-limiting embodiments of the second element 2 illustrated in figures 10, 11 and 13 to 18, the latter can also have a central hole CH, for example having a width between about 10 mm and about 80 mm, if desired about 30 mm.

The second ferromagnetic material of the second element 2 can also be a ferromagnetic steel, for example a ferritic stainless steel, such as AISI 430 stainless steel, or a martensitic stainless steel, such as AISI 410 stainless steel.

Optionally, the second element 2 has a thickness between about 0.1 mm and about 5 mm, for example about 0.5 mm and, if desired, a diameter between about 10 cm and about 24 cm, for example about 19 cm.

Preferably, the plurality of holes or undercuts 2c is homogeneously distributed on the upper, in use, surface 2b of the second element 2, for example with a distance of each hole or undercut 2c from those adjacent to it of between about 1 mm and about 7 mm, for example about 4 mm.

According to the non-limiting embodiment of the present invention shown in the figures, the holes or undercuts have a diameter or width between about 2 mm and about 6 mm, for example about 4 mm.

From a structural point of view, the plurality of holes or undercuts 2c can extend from the lower, in use, surface 2a to the upper, in use, surface 2b of the second element 2.

Again, according to the non-limiting embodiment of the present invention shown in figures 1 to 6, the respective delimiting wall 2d of the plurality of holes or undercuts 2c is an annular wall.

Preferably, the delimiting wall 2d, in use, is tapered from the bottom to the top.

In this regard, the plurality of holes or undercuts 2c and the respective delimiting walls 2d can be obtained by cold drilling or blanking.

The height or development of the 2d delimiting walls can be between about 1 mm and about 3 mm, for example about 2 mm.

If desired, the second element 2 can have a folded external edge 2e, for example forming an angle of about 90° with the upper, in use, surface 2b of the second element 2.

From a dimensional point of view, this external edge 2e, if present, can have an extension between about 1 mm and about 4 mm, for example equal to about 2 mm.

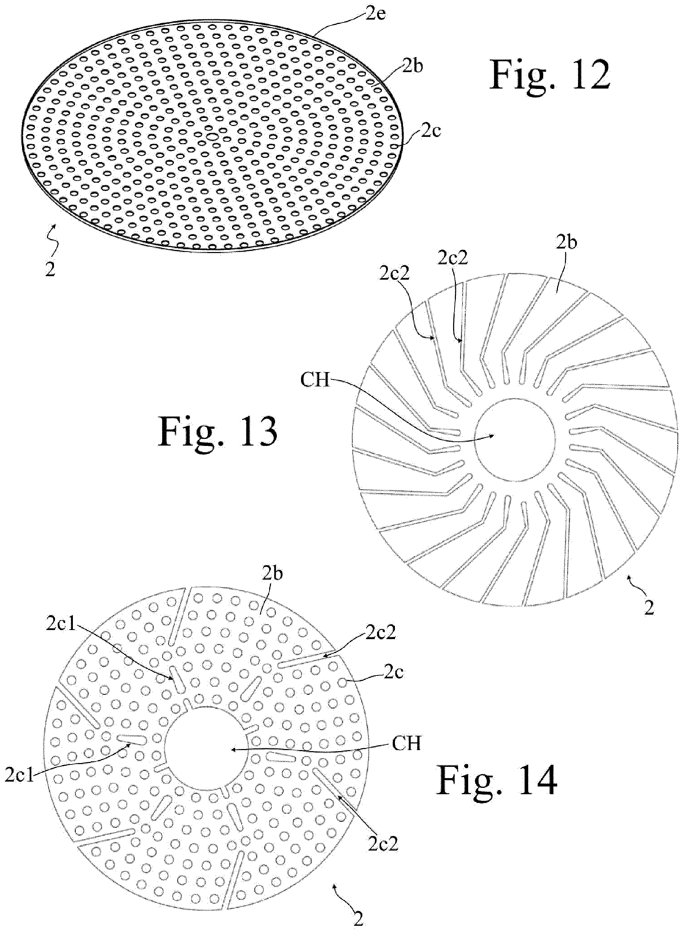

In figures 13 to 18, further examples of non-limiting embodiments of the second element 2 are visible, for example having in combination with the plurality of holes or undercuts 2c also one or more slots 2c1 and/or one or more notches 2c2 or even just one or more slots 2c1 or one or more notches 2c2. These non-limiting embodiments allow good direction of the eddy currents towards the first component 3 in non-ferromagnetic material.

Preferably, the step of permanently connecting the second element 2 comprises or takes place by means of the step of welding, for example spot welding or brazing or friction welding or LASER welding the second element 2 or, more particularly, the lower, in use, surface 2a of the same with the upper, in use, surface 1b of the first element 1.

According to the non-limiting embodiment of the present invention shown in figures 1 to 6, a plurality of welding points and/or spot welding beads is provided between the first element 1 and the second element 2 or, more in detail, between the upper, in use, surface 1a of the first element 1 and the lower, in use, surface 2a of the second element 2.

As regards the first component 3, if desired, it can be provided with a discoidal shape.

Alternatively, the first component 3 could also be provided in other shapes, for example with a rectangular plan shape, if desired with rounded edges, a square plan shape, if desired, with rounded edges, an elliptical plan shape, an annular plan shape, or similar.

It should be noted that this shape is to be considered as the raw shape of the first component 3, i.e., the shape before connecting it with other components that will make the container C.

Preferably, the non-ferromagnetic material of the first component 3 is aluminum, for example A14006 aluminum or A13003 aluminum or Al8006 aluminum.

Alternatively, the non-ferromagnetic material of the first component 3 could consist of or comprise an aluminum alloy or, more generally, another non-ferromagnetic material or an alloy with high thermal conductivity, good workability and compatibility with food contact.

Subsequently, the method M according to the present invention includes the step of permanently connecting the first component 3 with the upper, in use, surface 2b of the second element 2 of the second component 4 by means of a pressing step, preferably a cold pressing step.

It should be noted that the terminology "cold pressing step" refers to a pressing step which takes place at room temperature or, in any case, which does not use thermal energy to heat the first component 3 and the second component 4, thus avoiding their expansion and subsequent contraction.

In this regard, the step of permanently connecting the first component 3 comprises or preferably takes place by means of the step of cold pressing with a press the first component 3 with the upper, in use, surface 2b of the second element 2 of the second component 4.

For example, the press can be a hydraulic press capable of creating a predetermined force, such as to make the material of the first component 3 penetrate into the holes of the upper, in use, surface 2b of the second element 2 of the second component 4.

According to the non-limiting embodiment of the present invention shown in figures 1 to 6, in the step of permanently connecting the first component 3, coupling portions 3c of the latter penetrate and are permanently connected within the plurality of holes or undercuts 2c delimited laterally by the respective delimiting wall 2d and on the bottom by a respective closing portion 1c of the first element 1, and/or within the one or more slots 2c1 and/or within the one or more notches 2c2.

As can be understood, the presence of the plurality of holes or undercuts 2c on the second element 2 facilitates and improves the permanent connection between the first component 3 and the second component 4.

Furthermore, the tapering from the bottom to the top, if provided, of the respective delimiting walls 2d of the plurality of holes or undercuts 2c allows to further improve the coupling between the first component 3 and the second component 4 while the homogeneous distribution of the plurality of holes or undercuts 2c, also if provided, allows to prevent any areas without holes or undercuts from compromising the connection between the first component 3 and the second component 4.

Preferably, the forming step is performed by and during the same pressing step used for the step of permanently connecting the first component 3.

In this regard, it is possible to use a single plant, for example a single press, if desired a hydraulic press, both for the step of permanently connecting the first component 3 to the second component 4, and for the step of forming the body of the container C, thus avoiding the use of different plants and the production of semi-finished products which would only increase the production costs of the container C.

Optionally, the method M can also include the step of assembling further components to the container C for cooking food obtained following the forming step, for example one or more handles or grips and/or the like.

If desired, method M can also include a mechanical finishing step of the container C and/or a chemical or physical surface treatment step of the container C, for example a pickling, sandblasting and/or similar step and/or a step of painting the container C.

The method M allows to make a container C for cooking food using a cold pressing step, thus avoiding the use of thermal energy and eliminating or, in any case, significantly mitigating the possibility of disconnection of the bottom from the body of the container and/or or the deformation of the cooking base of the container following the transitions from expansion to contraction and/or vice versa to which it is typically subjected with the methods provided by the state of the art.

Furthermore, as already mentioned, the method M allows the use of a single plant for the production of both the bottom and the body of the container, thus avoiding the production of semi-finished products using different plants, thus significantly reducing production costs.

Furthermore, the presence of a first non-perforated element 1 in ferromagnetic material and a second perforated element 2 in ferromagnetic material allows both an improved performance of the container C when used on electromagnetic induction heat sources, thanks to the greater quantity of ferromagnetic material present on the bottom compared to the containers obtained with the methods described in the state of the art, and a better degree of coupling between the bottom and the body of the container C.

It should be noted that, at the same time, the permanent connection between the first component 3 and the second component 4 is also improved thanks to the particular configuration of the upper, in use, surface 2b of the second element 2 with the plurality of holes or undercuts 2c which they allow optimal locking between the first component 3 and the second component 4.

Subject-matter of the present invention is also a container C for cooking food.

The container C for cooking food according to the present invention comprises a first component 3 in a non-ferromagnetic material which constitutes a body of the container C and a second component 4 which constitutes a bottom 5 of the container C.

In particular, the second component 4 is permanently connected to the first component 3, and this second component 4 includes a first element 1, in a first ferromagnetic material, which defines or includes a lower, in use, surface 1a and an upper, in use, surface 1b, and a second element 2.

The second element 2 is in a second ferromagnetic material equal to or different from the first ferromagnetic material, and defines or includes a lower, in use, surface 2a, an upper, in use, surface 2b and a plurality of holes or undercuts 2c delimited by a respective delimiting wall 2d, included in the second element 2, which rises or develops from the upper, in use, surface 2b of the second element 2 and/or one or more slots 2c1 and/or one or more notches 2c2.

More in detail, the second element 2 is permanently connected to the upper, in use, surface 1b of the first element 1.

Furthermore, the first component 3 includes or defines a side wall 3a and a base portion 3b, permanently connected with the upper, in use, surface 2b of the second element 2, which delimits with the side wall 3a a cooking zone CZ of food.

The first ferromagnetic material of the first element 1 can be a ferromagnetic steel, for example a ferritic stainless steel, such as AISI 430 stainless steel, or a martensitic stainless steel, such as AISI 410 stainless steel.

Optionally, the first element 1 and/or the second element 2 can delimit a central hole CH, for example having a width between about 10 mm and about 80 mm, if desired about 30 mm.

The presence of a central hole CH allows for better formation of induced eddy currents and better anchoring between the first element 1, the second element 2 and the first component 3.

If desired, the second element 2 can have a folded external edge 2e, for example forming an angle of about 90° with the upper, in use, surface 2b of the second element 2.

From a dimensional point of view, this external edge 2e, if present, can have an extension between about 1 mm and about 4 mm, for example equal to about 2 mm.

A non-limiting example of embodiment of a second element 2 having a folded external edge 2e is illustrated in figures 10 and 12.

In figures from 13 to 19, further non-limiting embodiments of the second element 2 are visible, for example having in combination with the plurality of holes or undercuts 2c also one or more slots 2c1 and/or one or more notches 2c2 or even just one or more slots 2c1 or one or more notches 2c2. These non-limiting embodiments allow good direction of the eddy currents towards the first component 3 in non-ferromagnetic material.

The second ferromagnetic material of the second element 2 can also be a ferromagnetic steel, for example a ferritic stainless steel, such as AISI 430 stainless steel, or a martensitic stainless steel, such as AISI 410 stainless steel.

Preferably, the plurality of holes or undercuts 2c is homogeneously distributed on the upper, in use, surface 2b of the second element 2, for example with a distance of each hole or undercut 2c from those adjacent to it of between about 1 mm and about 7 mm, for example about 4 mm.

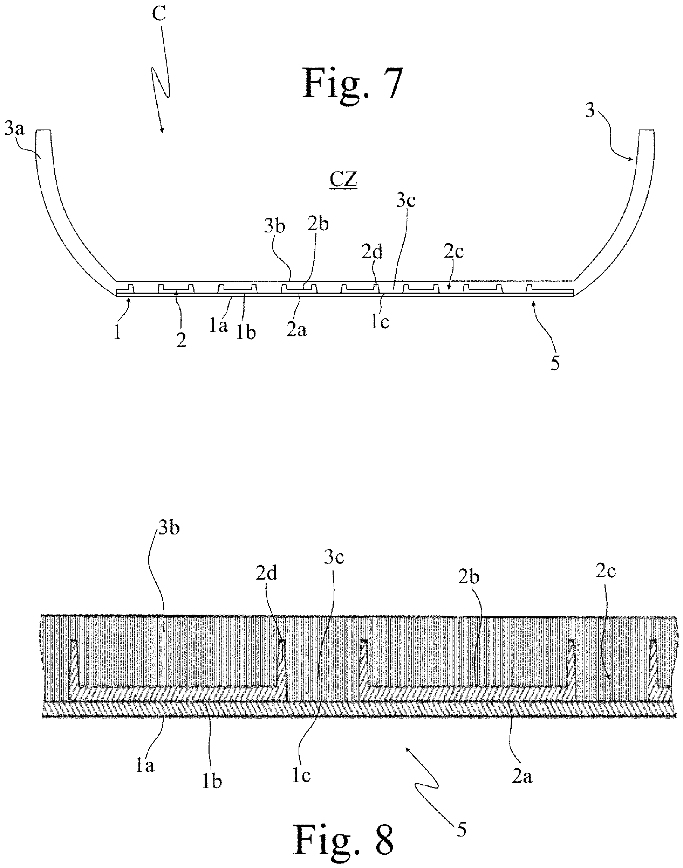

According to the non-limiting embodiment of the present invention shown in figure 7, the holes or undercuts 2c have a diameter or width between about 2 mm and about 6 mm, for example about 4 mm.

From a structural point of view, the plurality of holes or undercuts 2c can extend from the lower, in use, surface 2a to the upper, in use, surface 2b of the second element 2.

Again, according to the non-limiting embodiment of the present invention shown in figure 7, the respective delimiting wall 2d of the plurality of holes or undercuts 2c is an annular wall.

The delimiting wall 2d, in use, can be tapered from the bottom to the top to allow a better connection with the base portion 3b of the first component 3.

The height or development of the delimiting walls 2d can be between about 1 mm and about 3 mm, for example about 2 mm.

Then, the second element 2 is spot welded or friction welded or brazed or LASER welded with the upper, in use, surface 1b of the first element 1.

In this regard, a plurality of welding points and/or spot welding beads can be provided between the first element 1 and the second element 2 or, more in detail, between the upper, in use, surface 1a of the first element 1 and the lower, in use, surface 2a of the second element 2.

According to a version of the present invention, the non-ferromagnetic material of the first component 3 is aluminum, for example A14006 aluminum or A13003 aluminum or Al8006 aluminum.

Alternatively, the non-ferromagnetic material of the first component 3 could consist of or comprise an aluminum alloy or, more generally, another non-ferromagnetic material or an alloy with high thermal conductivity, good workability and compatibility with food contact.

From a structural point of view, according to the non-limiting embodiment of the present invention shown in figure 7, the base portion 3b is pressed, preferably cold pressed by means of a press, onto the upper, in use, surface 2b of the second element 2.

As mentioned above, the press can be a hydraulic press capable of creating a predetermined force, such as to make the material of the first component 3 penetrate into the holes of the upper, in use, surface 2b of the second element 2 of the second component 4.

Moreover, as already mentioned for the method, the terminology "cold pressed" indicates that the base portion 3b is pressed onto the upper, in use, surface 2b of the second element 2 at room temperature or, in any case, without the use of thermal energy to heat the first component 3 and the second component 4, thus avoiding their expansion and subsequent contraction.

More in detail, the base portion 3b preferably includes coupling portions 3c permanently connected inside the plurality of holes or undercuts 2c delimited laterally by the respective delimiting wall 2d and on the bottom by a respective closing portion 1c of the first element 1, and/or within one or more slots 2c1 and/or within one or more notches 2c2.

As can be understood, this particular type of permanent connection between the bottom 5 and the first component 3 allows optimal locking between these components.

Furthermore, it should be considered that the container C for cooking food according to the present invention or according to non-limiting embodiments of the present invention is advantageously obtained by means of the method according to the present invention or according to non-limiting embodiments of the latter.

Moreover, the container C can also include one or more gripping elements, for example one or more handles or grips and/or the like, if desired permanently or removably connected with the first component 3 of the container C.

In the container C for cooking food according to the present invention, the presence of a first element 1 in ferromagnetic material and a second perforated element 2 in ferromagnetic material allows both an improved performance of the same when used on electromagnetic induction heat sources, thanks to the greater quantity of ferromagnetic material present on the bottom compared to containers according to the state of the art, and a better degree of coupling between the bottom and the body of the container C.

Furthermore, the first non-perforated element 1 allows to obtain a container C which is aesthetically more appreciable than a container with a first perforated element.

It has thus been seen how the invention fully achieves the proposed objects.

Modifications and variations of the invention are possible within the scope of protection defined by the claims.

## Claims

1. Method (M) for making a container (C) for cooking food, comprising the steps of:
providing a first component (3) in a non-ferromagnetic material, designed to form the body of said container (C) for cooking food,
providing a second component (4) in a ferromagnetic material, designed to form a bottom (5) of said container (C) for cooking food,
permanently connecting said second component (4) to said first component (3) by means of a pressing step between said first component (3) and said second component (4),
forming, i.e., shaping or modelling, said first component (3), with or without said second component (4), i.e., before or after the step of permanently connecting said second component (4) to said first component (3), to obtain said body of said container (C) for cooking food,
**characterized in that** said second component (4) is obtained with the steps of:
providing at least a first element (1) in a first ferromagnetic material, said first element (1) comprising or defining a lower surface (1a) and an upper surface (1b),
providing a second element (2) in a second ferromagnetic material equal to or different from said first ferromagnetic material, said second element (2) comprising or defining a lower surface (2a), an upper surface, (2b) and a plurality of holes or undercuts (2c), delimited by a respective delimiting wall (2d) which rises or develops from said upper surface (2b) of said second element (2), and/or one or more slots (2c1) and/or one or more notches (2c2),
permanently connecting said second element (2) with the upper surface (1b) of said first element (1) to obtain said second component (4).

2. Method (M) according to claim 1, wherein the first ferromagnetic material of said first element (1) is ferromagnetic steel and the second ferromagnetic material of said second element (2) is ferromagnetic steel.

3. Method (M) according to claim 1 or 2, wherein the non-ferromagnetic material of said first component (3) is aluminum or consists of or comprises an aluminum alloy.

4. Method (M) according to any one of the preceding claims, wherein said step of permanently connecting said second element (2) comprises or takes place by means of a step of spot welding or brazing or friction welding or LASER welding said second element (2) with the upper surface (1b) of said first element (1).

5. Method (M) according to any one of the preceding claims, wherein said step of permanently connecting said first component (3) to said second component (4) comprises a step of cold pressing with a press said first component (3) with said upper surface (2b) of said second element (2) of said second component (4).

6. Method (M) according to any one of the preceding claims, wherein, in said step of permanently connecting said first component (3), coupling portions (3c) of the latter penetrate and are permanently connected within said plurality of holes or undercuts (2c) delimited laterally by said respective delimiting wall (2d) and on the bottom by a respective closing portion (1c) of said first element (1), and/or within said one or more slots (2c1) and/or within said one or more notches (2c2).

7. Method (M) according to any one of the preceding claims, wherein said step of forming said first component (3), to obtain said body of said container (C), is performed by and during the same pressing step used for said step of permanently connecting said first component (3) to said second component (4).

8. Method (M) according to any one of the preceding claims, wherein said step of providing at least a first element (1) and/or said step of providing a second element (2) involves providing said first element (1) and/or said second element (2) with a central hole (CH) delimited in or on them.

9. Container (C) for cooking food comprising a first component (3) in a non-ferromagnetic material, which constitutes a body of said container (C) for cooking food and a second component (4) in a ferromagnetic material which constitutes a bottom (5) of said container (C) for cooking food, said second component (4) being permanently connected to said first component (3), **characterized in that** said second component (4) includes a first element (1), in a first ferromagnetic material, which defines or comprises a lower surface (1a) and an upper surface (1b), a second element (2) in an equal or different second ferromagnetic material from said first ferromagnetic material, which defines or comprises a lower surface (2a), an upper surface (2b) and a plurality of holes or undercuts (2c) delimited by a respective delimiting wall (2d), comprised in said second element (2), which rises or develops from said upper surface (2b) of said second element (2), and/or one or more slots (2c1) and/or one or more notches (2c2), said second element (2) being permanently connected with the upper surface (1b) of said first element (1), said first component (3) comprising or defining a side wall (3a) and a base portion (3b), permanently connected to said upper surface (2b) of said second element (2), which delimits a food cooking zone (CZ) with said side wall (3a).

10. Container (C) according to claim 9, wherein the first ferromagnetic material of said first element (1) is ferromagnetic steel and the second ferromagnetic material of said second element (2) is ferromagnetic steel.

11. Container (C) according to claim 9 or 10, wherein the non-ferromagnetic material of said first component (3) is aluminum or consists of or comprises an aluminum alloy.

12. Container (C) according to any one of claims from 9 to 11, wherein said respective delimiting wall (2d), in use, is tapered from the bottom to the top to allow a better connection with said base portion (3b) of said first component (3) with said second component (4).

13. Container (C) according to any one of claims from 9 to 12, wherein said second element (2) is spot welded or brazed or friction welded or LASER welded with the upper surface (1b) of said first element (1).

14. Container (C) according to any one of claims from 9 to 13, wherein said base portion (3b) is pressed onto said upper surface (2b) of said second element (2).

15. Container (C) according to any one of claims from 9 to 14, wherein said base portion (3b) comprises coupling portions (3c) permanently connected within said plurality of holes or undercuts (2c) delimited laterally by said respective delimiting wall (2d) and on the bottom by a respective closing portion (1c) of said first element (1), and/or within said one or more slots (2c1) and/or within said one or more notches (2c2).

16. Container (C) according to any one of claims from 9 to 15, wherein said first element (1) and/or said second element (2) delimits a central hole (CH).

17. Container (C) according to any one of claims from 9 to 16 obtained by a method (M) according to any one of claims from 1 to 8.
